# EUROPÄISCHE PATENTSCHRIFT

(11) **EP 4 191 845 B1**
(45) Veröffentlichungstag und Bekanntmachung des Hinweises auf die Patenterteilung: **02.09.2026**
(21) Anmeldenummer: 23152396.0
(22) Anmeldetag: 06.12.2017
(51) Int. Cl.: B25C 1/06, H02K 41/025, H02K 41/035, H02K 33/02, B27F 7/11, H01F 7/08, H01F 7/16

(54) **ELEKTRODYNAMISCHER ANTRIEB**
ELECTRODYNAMIC DRIVE
ENTRAÎNEMENT ÉLECTRODYNAMIQUE

(30) Priorität: 06.12.2016 DE 102016014434; 13.12.2016 DE 102016014753; 20.12.2016 DE 102016015102
(43) Veröffentlichungstag der Anmeldung: 07.06.2023
(60) Teilanmeldung: 26194978.8
(62) Dokumentnummer(n) der früheren Anmeldung(en) nach Art. 76 EPÜ: 17816625.2 / 3 535 837
(73) Patentinhaber: Hilti Aktiengesellschaft, 9494 Schaan (LI)
(72) Erfinder: MECKLENBURG, Arno, 10999 Berlin (DE); DITTRICH, Tilo, 6800 Feldkirch (AT)
(74) Vertreter: Lorenz Seidler Gossel Part. mbB

(56) Entgegenhaltungen:
- WO-A1-2015/172824
- US-A- 3 778 697
- US-A1- 2003 183 670

## Beschreibung

Die vorliegende Erfindung betrifft ein handgeführtes Nagelsetzgerät mit einem elektrodynamischen Antrieb.

### Stand der Technik:

Bei handgeführten Nagelsetzgeräten werden üblicherweise pyrotechnische oder auch pneumatische Vorrichtungen eingesetzt, da elektromagnetische Antriebe oft nicht infrage kommen. Als Ausschlusskriterien für elektrische Antriebe zu nennen sind insbesondere:
- anwendungsbezogen unzureichende Kraft und/oder Arbeitsvermögen pro Antriebsmasse oder Antriebsvolumen
- bei hochdynamischen elektrischen Direktantrieben wie sog. Thomson-Coils und Railguns auch deren hoher Beschaltungsaufwand und/oder zu geringer Wirkungsgrad.

Bei Nagelsetzgeräten, und hier insbesondere handgeführte Nagelsetzgeräte, wird daher üblicherweise ein Kolben kraft der Verbrennung eines zündfähigen Gasgemisches oder einer Treibladung beschleunigt, einen Nagel einzutreiben.

Aus der US 6,830,173 B2 bzw. der zugehörigen Offenlegungsschrift US 2003/183670 A1 ist dagegen bereits ein Nagelsetzgerät mit einem elektrodynamischen Antriebgemäß dem Oberbegriff von Anspruch 1 bekannt.

Druckschrift WO2015172824 A1 zeigt einen auf einer Thomson Coil beruhenden Aktuator zum Antrieb eines Leistungsschalters zur Stromkreisunterbrechung mit einer Primärspule und mit einem Flusskonzentrator, welcher die Primärspule umgibt. Der Flusskonzentrator besteht aus einem weichmagnetischen oder weichferromagnetischen Material, z.B. Eisen, magnetischem Stahl oder einem Material wie Permadyne.

Die erfinderische Aufgabe besteht also darin, die Kraftkonstante und/oder den Wirkungsgrad des handgeführten Nagelsetzgerätes zu erhöhen.

Diese Aufgabe wird durch ein handgeführtes Nagelsetzgerät gemäß Anspruch 1 gelöst. Bevorzugte Ausgestaltungen der vorliegenden Erfindung sind Gegenstand der Unteransprüche.

Die vorliegende Erfindung umfasst ein handgeführtes Nagelsetzgerät gemäß Anspruch 1.

Dieses umfasst einen elektrodynamischer Antrieb, umfassend:
- eine erste Erregerspule,
- einen weichmagnetischen Rahmen, und
- einen entlang einer Achse beweglich gelagerten Kurzschlussläufer,

Der Rahmen weist eine Sättigungsflussdichte von mindestens 1,0 T und/oder eine effektive spezifische elektrische Leitfähigkeit von höchstens 10⁶ S/m auf, wobei die erste Erregerspule und/oder der Rahmen mindestens ein Mittel zur Zugentlastung aufweisen. Die Sättigungsflussdichte ist dabei diejenige Flussdichte, bei welcher die differentielle Permeabilität dB/dH eines Werkstoffs gleich der magnetischen Feldkonstante wird, bei welcher also die dimensionslose relative Permeabilität µᵣ infolge magnetischer Sättigung den Wert µᵣ = 1 annimmt.

Insbesondere handelt es sich um einen hochdynamischen elektrodynamischen Antrieb, insbesondere aufgebaut nach Art einer Thomson-Spule mit weichmagnetischem Rahmen.

In einer möglichen Ausführungsform weist die Erregerspule eine Wickelhöhe auf, welche größer ist als ihre Länge, die also flach ist.

In einer möglichen Ausführungsform ist die Erregerspule in dem weichmagnetischen Rahmen angeordnet und an diesem widergelagert.

In einer möglichen Ausführungsform stellt der Rahmen einen offenen Magnetkreis dar, welcher einen äußeren Bereich, einen Boden und einen inneren Bereich aufweist, und der stirnseitig geöffnet ist, wobei die erste Erregerspule den inneren Teil des Rahmens zumindest teilweise umschließt, und wobei der Kurzschlussläufer in seiner Hubanfangslage in die stirnseitige Öffnung des Rahmens eintaucht und dabei den inneren Teil des Rahmens zumindest teilweise umschließt.

In einer möglichen Ausführungsform ist der Kurzschlussläufer hierfür zumindest auf seiner der ersten Erregerspule zugewandten Seite hohlzylindrisch ausgebildet und/oder der Rahmen nach Art eines Topfmagneten aufgebaut.

In einer möglichen Ausführungsform ist der weichmagnetische Rahmen ganz oder überwiegend aus einem weichmagnetischen Kompositwerkstoff und/oder einem oder mehreren Blechpaketen gebildet.

Das Nagelsetzgerät umfasst damit insbesondere einen elektrodynamischen Antrieb, insbesondere einen hochdynamischen elektrodynamischen Antrieb, insbesondere aufgebaut nach Art einer Thomson-Spule mit weichmagnetischem Rahmen, umfassend:
- eine erste Erregerspule, deren Wickelhöhe größer ist als ihre Länge, die also flach ist;
- einen weichmagnetischen Rahmen, in welchem die erste Erregerspule angeordnet und an dem sie widergelagert ist, und der insbesondere nach Art eines Topfmagneten einen offenen Magnetkreis darstellt, welcher einen äußeren Bereich, einen Boden und einen inneren Bereich aufweist, und der stirnseitig geöffnet ist, wobei die erste Erregerspule den inneren Teil des Rahmens zumindest teilweise umschließt;
- einem zumindest auf seiner der ersten Erregerspule zugewandten Seite vorzugsweise hohlzylindrisch ausgebildeten, entlang einer Achse beweglich gelagerten Kurzschlussläufer, der in seiner Hubanfangslage in die stirnseitige Öffnung des Rahmens eintaucht und dabei den inneren Teil des Rahmens zumindest teilweise umschließt. Dabei ist vorgesehen, dass der Rahmen ganz oder überwiegend aus einem weichmagnetischen Kompositwerkstoff oder einem oder mehreren Blechpaketen gebildet wird, welcher eine Sättigungsflussdichte von mindestens 1,0 T, bevorzugt mindestens 1,3 T, besonders bevorzugt mindestens 1,5 T, sowie eine effektive spezifische elektrische Leitfähigkeit von höchstens 10⁶ S/m aufweist, und die erste Erregerspule und/oder der Rahmen mindestens ein Mittel zur Zugentlastung aufweisen, insbesondere in Form einer Einhausung.

Die Zugentlastung nimmt bevorzugt zumindest die während eines Stellvorgangs senkrecht zur Bewegungsrichtung an der ersten Erregerspule auftretenden radialen Kräfte wenigstens teilweise auf. Bei dem elektrodynamischen Antrieb wird bevorzugt die auf den Kurzschlussläufer wirkende Lorentzkraft zum Verrichten von Arbeit genutzt.

In einer möglichen Ausführungsform weist derjenige Raum zwischen äußerem und innerem Bereich des Rahmens, in den der Kurzschlussläufer eintaucht, die Gestalt eines Zylindermantels auf, wobei dessen Längsachse der Bewegungsrichtung des Antriebs sowie der Wickelachse der Spule(n) entspricht.

In einer möglichen Ausführungsform ist der aus einem weichmagnetischen Kompositwerkstoff bestehende Rahmen aus mehreren Teilen und/oder Segmenten zusammengesetzt. Die mehreren Teile und/oder Segmente können miteinander verklebt oder vergossen sein.

Der Rahmen ist bevorzugt so aus den mehreren Teile und/oder Segmenten zusammengesetzt, dass das Auftreten von Zugspannungen zumindest dahingehend vermindert wird, dass ein Brechen des Rahmens und/oder seiner Teile während des Betriebs vermieden wird.

In einer möglichen Ausführungsform ist der Kurzschlussläufer des Antriebs ganz oder teilweise aus einem nichtmagnetischen Werkstoff gebildet, vorzugsweise aus einem elektrisch leitfähigen und nichtmagnetischen Werkstoff, insbesondere aus einer aushärtbaren Aluminiumlegierung.

In einer möglichen Ausführungsform weist der Kurzschlussläufer bodenseitig, also in der Hubanfangslage auf der der ersten Erregerspule (30) zugewandten Seite des Kurzschlussläufers (40), einen Ring aus elektrisch gut leitendem Material, beispielsweise Kupfer, auf.

Bevorzugt ist der Ring in den Kurzschlussläufer und insbesondere in den nichtmagnetischen Werkstoff des Kurzschlussläufers eingebettet und/oder mit dem Kurzschlussläufer stoff- und/oder formschlüssig verbunden.

In einer möglichen Ausführungsform beträgt die spezifische Leitfähigkeit des Rings zumindest 50% derjenigen reinen Kupfers (%IACS).

Der Ring kann beispielsweise aus reinem Kupfer oder einer Kupfer- oder Aluminiumlegierung oder einem Kupferbasis-Kompositwerkstoff bestehen.

In einer möglichen Ausführungsform weist der Ring in Bewegungsrichtung ganz oder überwiegend eine Ausdehnung von mindestens I = sqrt (t * *rho* / *pi* * *µ*) auf, wobei t die Halbwertsbreite des Stromes in der Erregerspule während eines bemessungsgemäßen Stellvorgangs ist, *rho* der spezifische elektrische Widerstand des Rings ist, pi die Kreiszahl ist und µ die magnetische Feldkonstante ist.

In einer möglichen Ausführungsform ist der Kurzschlussläufer und/oder ein von dem Kurzschlussläufer angetriebener Kolben ganz oder teilweise aus einer aushärtbaren Aluminiumlegierung gebildet, welche weiter bevorzugt in ausgehärtetem Zustand vorliegt.

In einer möglichen Ausführungsform ist der Kurzschlussläufer und/oder ein von dem Kurzschlussläufer angetriebener Kolben ganz oder teilweise aus einer aushärtbaren Aluminiumlegierung gebildet, die im ausgehärteten Zustand eine spezifische elektrische Leitfähigkeit von > 25 % derjenigen reinen Kupfers aufweist (%IACS).

Erfindungsgemäß wird der elektrodynamischer Antrieb zumindest teilweise vermittels einer Kondensatorentladung betrieben. Hierbei wird zur Betätigung des Antriebs mindestens ein Kondensator über die erste Erregerspule entladen.

Dabei wird die Kondensatorentladung durch Schalten eines oder mehrerer Halbleiterschalter herbeigeführt, wobei der Halbleiterschalter vorzugsweise ein Thyristor ist.

Der Halbleiterschalter kann durch eine mit ihm in Reihe geschaltete, sättigende Induktivität vor einer Beschädigung während des Betriebs geschützt werden, indem die sättigende Induktivität bemessen wird, die initiale Stromanstiegsrate dl/dt hinreichend zu begrenzen.

Der Antrieb weist weiterhin eine Kondensatoranordnung mit mindestens einem Kondensator auf. Bei dem oder den Kondensatoren handelt es sich bevorzugt um einen oder mehrere Elektrolyt- und/oder Folien- und/oder Filmkondensatoren. Bevorzugt umfasst die Kondensatoranordnung mindestens einen Folien- und/oder Filmkondensator.

Die Kondensatoranordnung speichert bevorzugt zwischen 0,1 kJ und 10 kJ Energie, weiter bevorzugt mehr als 0,3 kJ.

Die Kondensatoranordnung weist bevorzugt eine Kapazität zwischen 0,1 mF und 20 mF und/oder einen Reihenwiderstand (Electrical Serial Resistance) zwischen 0,1 mOhm und 100 mOhm auf.

In einer möglichen Ausführungsform kann der elektrodynamische Antrieb einen Hubmagneten umfassen oder an einem solchen betrieben werden, wobei der Anker des Hubmagneten, welcher beispielsweise aus einem Teil des Rahmens, zum Beispiel des Bodens, selbst gebildet werden kann, während eines Stellvorganges vermittels eines überwiegend elastischen Stoßes einen Impuls auf den Kurzschlussläufer überträgt, diesen zu beschleunigen, und wobei eine Kondensatorentladung über die erste Erregerspule mit dem elastischen Stoß synchronisiert durchgeführt wird.

In einer möglichen Ausführungsform beträgt die höchste während eines Stellvorganges an die Erregerspule angelegte Spannung höchstens 600V, bevorzugt höchstens 500V, weiter bevorzugt höchstens 450V. In diesem Fall wird bevorzugt ein Elektrolytkondensator zum Betrieb des Antriebs eingesetzt.

In einer möglichen Ausführungsform beträgt die höchste während eines Stellvorganges an die Erregerspule angelegte Spannung zwischen 1 kV und 2 kV. Hierdurch lassen sich bessere Wirkungsgrade erzielen. In diesem Fall wird bevorzugt ein Folien- und/oder Filmkondensator zum Betrieb des Antriebs eingesetzt.

In einer möglichen Ausführungsform weist zumindest der überwiegende Teil des Rahmens eine effektive spezifische elektrische Leitfähigkeit von weniger als 10^5 S/m, bevorzugt von weniger als 10^4 S/m auf.

In einer möglichen Ausführungsform weist das Material des Rahmens ganz oder überwiegend eine Sättigungsflussdichte Bₛ > 1,5 T, bevorzugt Bₛ > 1,75 T, weiter bevorzugt Bₛ > 1,9 T auf.

In einer möglichen Ausführungsform ist die erste Erregerspule dahingehend ausgelegt, den Einfluss des Skin-Effekts zu vermindern, indem anstelle eines massiven einzelnen Leiters die Windungen nach Art einer Litze aus mehreren gegen einander isolierten einzelnen Leitern gebildet werden, und/oder indem ein Flachdraht verwendet wird.

Erfindungsgemäß weist die erste Erregerspule einen Kupferfüllgrad von wenigstens 30%, bevorzugt von wenigstens 40%, weiter bevorzugt von wenigstens 50%, weiter bevorzugt von wenigstens 60% auf.

Insbesondere liegt der Kupferfüllgrad zwischen 70 % und 85 %.

In einer möglichen Ausführungsform ist die erste Erregerspule vergossen und durch eine Faserverstärkung gegen die während eines Stellvorgangs wirkenden (Lorentz-)Kräfte zusätzlich zugentlastet.

In einer möglichen Ausführungsform erfolgt die Zugentlastung in Gestalt einer zylindrischen Einhausung der Spule mit einem faserverstärkten Kompositwerkstoff innerhalb des äußeren Bereichs des Rahmens.

In einer möglichen Ausführungsform ist die Zugentlastung in Form einer Einhausung ausgebildet, und besteht bevorzugt in einer den Antrieb und/oder Rahmen zumindest teilweise um den Umfang umschließenden Einhausung.

Die Einhausung ist bevorzugt aus einem Material mit einer Zugfestigkeit von mehr als 700 MPa, bevorzugt mehr als 1400 MPa gefertigt.

In einer möglichen Ausführungsform kann für die Einhausung ein Faser-Kompositwerkstoff und/oder ein Maraging-Stahl eingesetzt werden.

In einer möglichen Ausführungsform weist die Einhausung die Form eines Hohlzylinders auf, dessen Achse mit der Bewegungsachse des Antriebs übereinstimmt. Die Einhausung kann bodenseitig, also auf der Seite vom Boden des Rahmens, zum Beispiel ähnlich einem Topf, geschlossen ausgebildet sein. Alternativ kann die Einhausung auf der Seite des Bodens des Rahmens offen sein.

In einer möglichen Ausführungsform sind die Zuleitungen zur ersten Erregerspule verdrillt. Alternativ oder zusätzlich können die Zuleitungen zur ersten Erregerspule nach Art eines Koaxialkabels aus einem geschlossenen äußeren sowie einem inneren Leiter gebildet werden, wobei diese nicht rotationssymmetrisch ausgestaltet sein müssen. In einer möglichen Ausführungsform sind die Zuleitungen zur ersten Erregerspule als Flachdrähte ausgebildet, welche ohne wesentlichen Zwischenraum aneinander anliegen, d.h. sie oder ihre Isolationsummantelungen berühren sich oder begrenzen einen unwesentlichen Spalt, insbesondere Luftspalt zwischen sich. "Unwesentlich" ist hierbei so zu verstehen, dass die zusätzliche Selbstinduktion, mit welcher die Zuleitungen infolge des Spalts behaftet sind, klein ist verglichen mit der kleinsten Selbstinduktion des Antriebs, welche von dessen Betriebszustand abhängt.

In einer möglichen Ausführungsform weist der elektrodynamische Antrieb eine zylindrische Einhausung auf, welche aus einem Faser-Verbundwerkstoff besteht und ein erstes Gewebe aus Kohlefaser, ein zweites Gewebe aus einem oder mehreren elektrisch isolierenden Materialien, beispielsweise Glas-, HPPE- oder Aramidfaser, sowie eine Kunststoff-Matrix umfasst, wobei nach Art sogenannter Ringbandkerne das elektrisch isolierende Gewebe als isolierende Zwischenlage zwischen Windungen aus Kohlefaser-Gewebe genutzt wird, von elektromagnetischen Wechselfeldern hervorgerufene Wirbelströme zu dämpfen.

In einer möglichen Ausführungsform weist der elektrodynamische Antrieb einen Kolben auf, welcher durch den Kurzschlussläufer angetrieben wird. Der Kurzschlussläufer kann hierfür bevorzugt starr mit dem Kolben in Verbindung stehen und/oder einstückig mit diesem gebildet sein. Der Kurzschlussläufer kann jedoch auch einen Mitnehmer aufweisen, durch welchen er auf den vom Kurzschlussläufer getrennt ausgebildeten Kolben einwirkt.

Das vordere Ende des Kolbens kann bei einer Auslösung des elektrodynamischen Antriebs zur Übertragung der durch den Antrieb verrichteten Arbeit auf ein Ziel einwirken.

Bevorzugt ist der Kolben zumindest einseitig, bevorzugt im Bereich seines vorderen Endes, verschieblich gelagert.

Erfindungsgemäß weist der Antrieb eine Rückstellvorrichtung für den Kurzschlussläufer und/oder den Kolben auf, welche den Kolben und/oder den Kurzschlussläufer nach dem Auslösen des Antriebs in eine Hubanfangslage zurückzustellt. Bevorzugt ist die Rückstellvorrichtung so ausgestaltet, dass sie in der Hubanfangslage eine Haltekraft auf den Kolben und/oder den Kurzschlussläufer ausübt. In einer möglichen Ausführungsform arbeitet die Rückstellvorrichtung permanentmagnetisch.

In einer möglichen Ausgestaltung der vorliegenden Erfindung geht ein hinteres Ende des Kolbens durch eine Öffnung in dem Rahmen hindurch. Bevorzugt weist der Antrieb in diesem Fall eine Rückstellvorrichtung für den Kurzschlussläufer und den Kolben auf, welche auf das hintere Ende des Kolbens eine Rückstellkraft ausübt.

Der Kolben kann einteilig oder mehrteilig ausgeführt sein. Bei einer mehrteiligen Ausführung sind die einzelnen Teile nicht notwendigerweise, aber bevorzugt starr miteinander verbunden.

Die Rückstellvorrichtung ist bevorzugt auf der dem Kurzschlussläufer abgewandten Seite des Rahmens angeordnet.

Die Rückstellvorrichtung kann ein Gleitlager für das hintere Ende des Kolbens aufweisen.

Bevorzugt wird die Rückstellkraft permanentmagnetisch erzeugt.

Bevorzugt ist das hintere Ende des Kolbens aus einem weichmagnetischen Material ausgebildet. Das hintere Ende des Kolbens kann aus einem Blechpaket gefertigt sein und/oder Schlitze aufweisen, um Wirbelströme zu verringern.

Weiterhin kann die Rückstellvorrichtung zur Erzeugung der Rückstellkraft einen oder mehrere Permanentmagnete aufweisen. Insbesondere umfasst die Rückstellvorrichtung bevorzugt eine Anordnung aus einer Mehrzahl von permanentmagnetischen Elementen und/oder permanentmagnetischen Bereichen, welche einen Magnetkreis bilden, der beim Rückstellen des Kolbens zunehmend geschlossen wird, indem das hintere Ende des Kolbens zunehmend in eine Aussparung in der Anordnung einfährt. Insbesondere kann die Anordnung die Form eines Hohlzylinders aufweisen.

Die Anordnung kann weiterhin ein Halbach-Array bilden.

Gemäß der vorliegenden Erfindung umfasst der Antrieb eine Kondensatoranordnung und einen Schalter, wobei durch Schließen des Schalters eine Entladung der Kondensatoranordnung über die Erregerspule herbeigeführt wird, durch welche der Kurzschlussläufer und/oder der Kolben aus ihren Hubanfangslagen heraus beschleunigt werden.

Der Begriff "Nagel" setzt erfindungsgemäß keine bestimmte Form voraus. Insbesondere umfasst der Begriff "Nagel" auch Bolzen, Stifte, etc. Insbesondere handelt es sich bei einem Nagel im Sinne der vorliegenden Anmeldung jedoch um ein Befestigungselement mit einem stiftförmigen Abschnitt.

Erfindungsgemäß umfasst das handgeführte Nagelsetzgerät
- mindestens einen Kondensator,
- mindestens einen elektrochemischen Energiespeicher,
- mindestens einen Schaltwandler,
- mindestens einen Schalter,
- einen Kolben,
- eine Rückstellvorrichtung für den Kurzschlussläufer und den Kolben,
wobei zum Setzen eines Nagels zuerst der Kondensator mit Hilfe des Schaltwandlers mit elektrischer Energie aus dem elektrochemischen Energiespeicher aufgeladen wird, woraufhin der Schalter geschlossen wird, um eine Entladung des Kondensators über die Erregerspule herbeizuführen, woraufhin der Kurzschlussläufer und der Kolben aus ihren Hubanfangslagen heraus beschleunigt werden, und der Kolben genutzt wird, den Nagel einzutreiben, und wonach die Rückstellvorrichtung benutzt wird, den Kolben und den Kurzschlussläufer in die Hubanfangslagen zurückzustellen.

In einer möglichen Ausführungsform weist der elektrodynamische Antrieb während eines bemessungsgemäßen Stellvorganges eine maximale Kraftdichte von mehr als 100kN/I, bevorzugt von mehr als 200kN/I, weiter bevorzugt von mehr als 300 kN/I, jeweils bezogen auf das Volumen des elektrischen Antriebs, auf. Die maximale Kraftdichte ist dabei als der Quotient aus der maximalen den Kurzschlussläufer beaufschlagenden Lorentzkraft und dem Volumen des elektrodynamischen Antriebs zu verstehen. Der elektrodynamische Antrieb umfasst und besteht insbesondere aus dem Rahmen, dem Wickelraum der Erregerspule und dem in den Rahmen eintauchenden Teil des Kurzschlussläufers.

Bevorzugt wird das Volumen des elektrodynamischen Antriebs daher als die Summe der Volumina des Rahmens, des Wickelraums der Erregerspule sowie des in den Rahmen eintauchenden Teils des Kurzschlussläufers definiert. Taucht der Kurzschlussläufer nicht in den Rahmen ein, wird daher das Volumen des elektrodynamischen Antriebs bevorzugt als die Summe der Volumina des Rahmens und des Wickelraums der Erregerspule definiert.

In einer möglichen Ausführungsform weist der elektrodynamische Antrieb am Kraftmaximum während eines bemessungsgemäßen Stellvorganges eine maximale Kraftdichte auf.

In einer möglichen Ausführungsform ist das handgeführtes Nagelsetzgerät derart ausgebildet oder weist eine solche zusätzliche Vorrichtung auf, dass beim Rückstellens des Antriebs, also bei einem Zurückstellen von Kurzschlussläufer und Kolben in deren jeweilige Hubanfangslage, ein mechanischer Kontakt zwischen Kurzschlussläufer und erster Erregerspule verhindert wird.

Bevorzugt ist hierfür ein verstellbarer Anschlag für den Kurzschlussläufer und/oder Kolben vorgesehen, insbesondere in Form einer durch den Rahmen hindurchgehenden Schraube. Insbesondere dient der Rahmen oder eine Zugentlastung des Rahmens als Anschlag.

Erfindungsgemäß ist die Setzenergie des Nagelsetzgerätes, insbesondere die durch Aufladen des oder der Kondensatoren erzielbare Setzenergie ≥ 10J, bevorzugt ≥ 100J, weiter bevorzugt ≥ 200J.

Bei dem mindestens einen Kondensator handelt es sich bevorzugt um einen Filmkondensator oder einen Folienkondensator.

In einer möglichen Ausführungsform weist das handgeführtes Nagelsetzgerät einen Elektrolyt-, Film- oder Folienkondensator auf, dessen Gehäuse wenigstens teilweise vom Gehäuse des Setzgerätes selbst gebildet wird, der Wickel des Kondensators also kein vollständiges eigenständiges Gehäuse besitzt.

Bevorzugt ist das Gehäuses des Setzgerätes im Bereich des Wickels metallisch und besteht weiter bevorzugt aus einer Aluminiumlegierung.

Das Gehäuse des Setzgerätes kann im Bereich des Wickels eine strukturierte Oberfläche insbesondere nach Art eines Kühlkörpers aufweisen.

In einer möglichen Ausführungsform handelt es sich bei dem elektrochemischen Energiespeicher um einen Akkumulator.

Erfindungsgemäß handelt es sich bei dem mindestens einen Schalter um einen Halbleiterschalter, insbesondere um einen Thyristor.

Die vorliegende Erfindung wird nun anhand von Ausführungsbeispielen und Zeichnungen näher beschrieben.

Dabei zeigen:
- Fig. 1: einen Längsschnitt durch ein erstes Ausführungsbeispiel eines erfindungsgemäßen Antriebs,
- Fig. 2: eine Detailansicht eines zweiten Ausführungsbeispiels eines erfindungsgemäßen Antriebs im Längsschnitt, wobei lediglich eine Hälfte des rotationssymmetrischen Aufbaus dargestellt ist,
- Fig. 3: mehrere Axialschnitte durch Segmente, aus welchen der weichmagnetische Rahmen in dem in Fig. 1 gezeigten Ausführungsbeispiel aufgebaut ist,
- Fig. 4a bis d): ein weiteres Ausführungsbeispiel eines erfindungsgemäßen Antriebs mit einer Rückstellvorrichtung und
- Fig. 5: ein Ausführungsbeispiel eines erfindungsgemäßen Nagelsetzgerätes.

**Die nachfolgenden** Ausführungen dienen dem besseren Verständnis der Erfindung, sie sind ausschließlich als Beispiel zu betrachten und keinesfalls einschränkend zu verstehen.

In Abgrenzung zur gegenständlichen, o.g. Anmeldung der ABB wird der als "Flusskonzentrator" ausgebildete Rahmen (10) im Ausführungsbeispiel aus einem weichmagnetischen Kompositwerkstoff (nachfolgend: SMC, für "soft magnetic composite") und/oder aus einem oder mehreren weichmagnetischen Blechpaketen gebildet, welcher eine Sättigungsflussdichte von mindestens 1,5 T aufweist sowie eine effektive spezifische elektrische Leitfähigkeit von höchstens 10⁶ S/m. Vorzugsweise wird der Rahmen aus einem SMC mit einer spezifischen Leitfähigkeit < 10⁴ S/m, einer Sättigungsflussdichte Bₛ ≥ 1,9T und einer maximalen relativen Permeabilität µᵣ ≥ 50 gebildet. Des Weiteren sollten der oder die Rahmenwerkstoffe mit Hinblick auf Festigkeitsanforderungen danach ausgewählt werden, eine hohe Streckgrenze zu besitzen. Für die Umsetzung der Erfindung gut geeignete SMCs sind unter dem Markennamen Somaloy bekannt und erhältlich.

Bisher erreichen SMCs nicht die hohen Sättigungsflussdichten der bekannten magnetischen Eisen-Kobalt-Legierungen (bspw. Vacoflux). Angesichts der hohen Dynamik, auf welche die Erfindung abzielt, und für die sie bestimmt ist, tritt dieser Umstand in den meisten Einsatzfällen aber bei weitem hinter die effektive Bedämpfung von Wirbelströmen in SMCs zurück.

Mit den bekannten weichmagnetischen Legierungen (als Vollmaterialien) lassen sich die erfindungsgemäß erwünschten Eigenschaften, Dynamik und Wirkungsgrad, nicht zureichend erzielen.

Ein weiterer wesentlicher Aspekt der Erfindung besteht in einer Zugentlastung der Antriebsspule(n) und/oder des Rahmens, da die erfindungsgemäß gewünschten Eigenschaften erst bei sehr hohen magnetischen Drücken erreicht werden können, was zu einer starken strukturellen Beanspruchung des Antriebs bei jedem Stellvorgang führt. Zur Zugentlastung des Rahmens (10) kommen neben Einhausungen (20) aus beispielsweise sog. Maraging-Stählen insbesondere auch Faserverbundmaterialien in Betracht. Für eine Zugentlastung der Spule (30) ist es möglich, hochfeste Fasern bzw. Textilien mit oder um dem oder den elektrischen Leitern der Spule mit zu wickeln und zu vergießen. Dabei wird das Fasermaterial neben seiner Zugfestigkeit bevorzugt danach ausgewählt, auch ein höheres Zugmodul als der elektrische Leiter selbst aufzuweisen. Schließlich kann die Spule vergossen oder umspritzt werden, wobei die Vergussmasse vorzugsweise danach ausgewählt wird, einerseits eine möglichst hohe Eigenfestigkeit, eine hohe Streckgrenze, und ein - für ein Polymer - hohes Zugmodul aufzuweisen, und andererseits möglichst fest am elektrischen Leiter bzw. dessen Lackoberfläche sowie an dem Fasermaterial selbst zu haften. Sofern der Antrieb unter Bedingungen betrieben wird, welche zu einer nennenswerten thermischen Belastung der Spule führen, sollte die Vergussmasse außerdem danach ausgewählt werden, eine hohe Wärmeleitfähigkeit zu besitzen; hierzu kann die Vergussmasse selbst entsprechend gefüllt sein, beispielsweise mit AIN als Füllstoff.

Ggf. kann die Spule auch mit einer Kühlvorrichtung, insbesondere einer aktiven oder passiven Flüssigkeitskühlung, ausgerüstet werden und/oder für eine feste thermische Anbindung der Spule an den weichmagnetischen Rahmen gesorgt werden, welcher seinerseits selbst thermisch mit einem Kühlkörper verbunden sein kann.

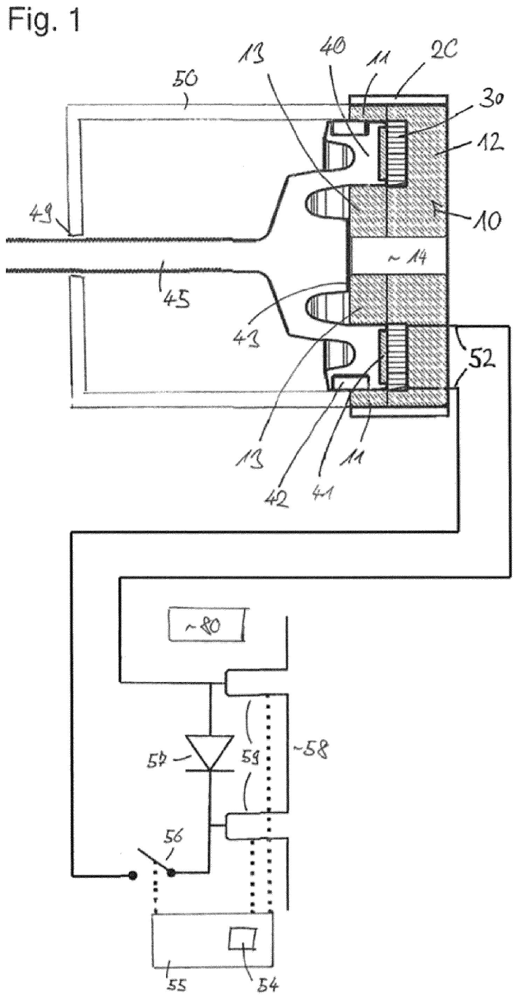

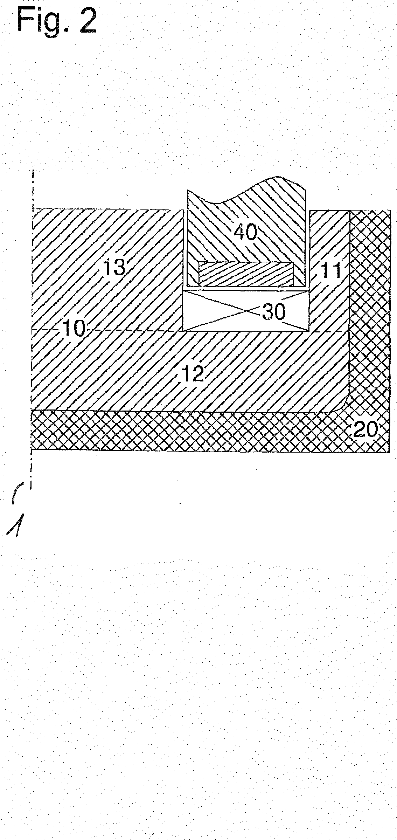

Abschließend wird die Erfindung an einem konkreten Beispiel erläutert. Fig. 1 und 2 zeigen Längsschnitte eines ersten und eines zweiten Ausführungsbeispiels des um die Achse (1) rotationssymmetrischen Antriebs mit weichmagnetischem Rahmen (10), der Form nach ähnlich dem Rahmen bekannter Topfmagnete, mit abgerundeter unterer Kante, einer zugentlastenden Einhausung aus Maraging-Stahl (20), einer an Rahmen (10) direkt oder indirekt widergelagerten ersten Erregerspule (30), welche aus beispielsweise faserverstärktem Flachdraht gebildet wird und die vergossen ist, wobei zur Beherrschung des Skin-Effekts jede einzelne Windung nach Art einer Litze aus mehreren parallel geschalteten dünnen (Flach-)Drähten gebildet werden kann, sowie dem Kurzschlussläufer (40), welcher aus einer hochfesten (aushärtbaren) Aluminiumlegierung (z.B. 7068) besteht, und in welchem auf der der Spule zugewandten Seite ein elektrisch hervorragend leitender Ring (41) aus (hier z.B.) reinem Cu eingebettet ist.

Alternativ ist es möglich, einen Ring (41) (aus Cu oder Al oder einer Cu- oder Al-Legierung mit gegenüber den Reinmetallen stark erhöhter Festigkeit, jedoch möglichst guter elektrischer Leitfähigkeit), welcher bspw. den gleichen Außen- und Innenradius aufweist wie der übrige Kurzschlussläufer (40), auf dessen der ersten Erregerspule (30) zugewandten Seite mit diesem (40) stoff- oder formschlüssig zu verbinden.

Dabei ist die Einhaltung aller Festigkeitsanforderungen bei der Konstruktion eines konkreten Antriebs auf den Einsatzfall vorzugsweise unter Zuhilfenahme von Computersimulationen (FEM) zu bestimmen.

In Fig. 1 wird als Zugentlastung eine Einhausung (20) in Form eines Zylindermantels eingesetzt, welche den Umfang des Rahmens (10) über dessen gesamte axiale Länge umgibt. In Fig. 2 weist die Einhausung (20) dagegen zusätzlich zu dem Zylindermantel einen Bodenbereich auf.

Der Kurzschlussläufer weist auf seinem Außenumfang ein Gleitlager (42) auf, mit welchem der Kurzschlussläufer in einem Gehäuse (50) des Antriebs axial-verschieblich gelagert ist. Der Kurzschlussläufer (40) steht mit einem sich in axialer Richtung erstreckenden Kolben (45) in Verbindung, welcher der Übertragung der durch den Kurzschlussläufer erzeugten Kräfte dient. Der Kolben erstreckt sich ausgehend von dem Kurzschlussläufer durch das Innere des Gehäuses und erstreckt sich durch eine Kolbenführung (49) hindurch. Bevorzugt ist auch der Kolben (45) gleitend gelagert.

Bevorzugt wird eine Vorrichtung oder Auslegung eingesetzt, welche beim Rückstellen des Antriebs ein (festes) Aufsetzen des Kurzschlussläufers (40) auf die erste Erregerspule (30) sicher verhindert und damit eine mögliche Beschädigung der Spule vermeidet.

Das Gehäuse kann als Abschirmung für den Antrieb dienen, um die entsprechenden EMV-Kriterien zu erfüllen. Bevorzugt wird das Gehäuse daher aus Aluminium und/oder einer Aluminium-Legierung gefertigt.

Insbesondere können aushärtbare Aluminiumlegierungen wie 7068 in ausgehärtetem Zustand eingesetzt werden, da sie hohe elektrische Leitfähigkeit mit hoher mechanischer Festigkeit sowie hinreichender Korrosionsbeständigkeit kombinieren.

Weiterhin kann der Antrieb als Abschirmung eine - bevorzugt dünne - äußere Einhausung aus hochpermeablem weichmagnetischen Material (z.B. µ-Metall) aufweisen, welches außerdem eine hohe Sättigungspolarisation aufweisen sollte. Hier kommen, µ-Metall deutlich überlegen, Folien aus weichmagnetischen metallischen Gläsern oder nanokristallinen Werkstoffen mit Sättigungsflussdichten >1T (und v.a. >1,2T) besonders in Betracht.

In Fig. 1 ist hierzu eine zum Rahmen (10) gewandte Fläche (43) des Kolbens (10) oder des Kurzschlussläufers (40) als Anschlag ausgeführt, durch welchen die Position des Kurzschlussläufers in der Hubanfangslage definiert wird. Der Anschlag (43) kann mit dem Rahmen (10) zusammenwirken.

Bevorzugt wirkt der Anschlag (43) jedoch mit einem Einstellelement zusammen, durch welches der Abstand des bodenseitigen Endes des Kurzschlussläufers (40) bzw. des Rings (41) in der Hubanfangslage zu der Erregerspule (30) eingestellt werden kann. Beispielsweise kann eine Schraube durch die Bohrung 14 in dem Rahmen (10) hindurchgeführt werden und als einstellbarer Gegenanschlag dienen. Hierdurch kann verhindert werden, dass das bodenseitige Ende des Kurzschlussläufers (40) bzw. der Ring (41) bei einer Zurückstellung in die Hubanfangslage die Erregerspule (30) beschädigt.

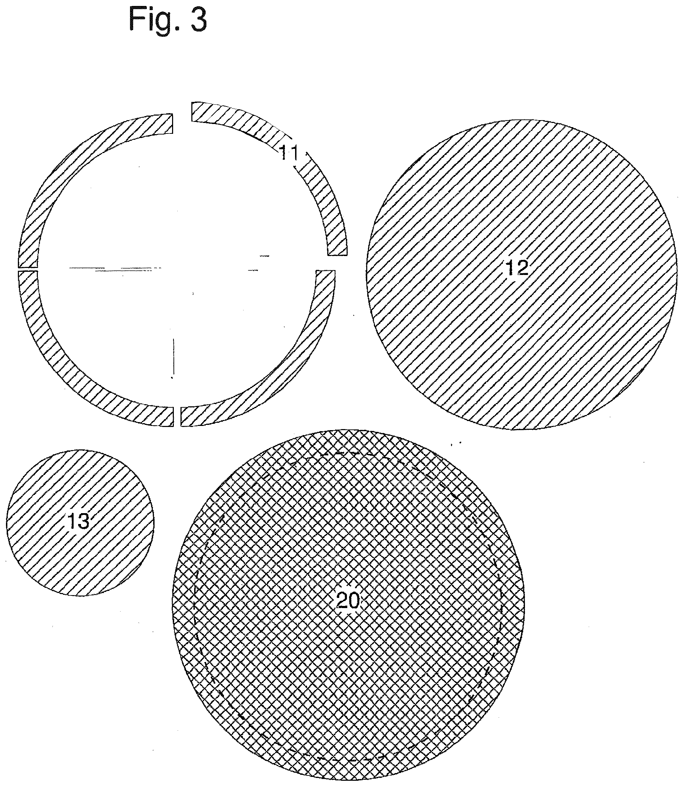

Fig. 3 zeigt, dass der Rahmen (10) aus einer Mehrzahl von Teilen (im äußeren Bereich des Rahmens aus Kreissegmenten) zusammengesetzt sein kann; dies ermöglicht beim Betrieb eine gewisse Bewegung der Teile gegen einander, wodurch eine Beschädigung des vergleichsweise spröden SMC vermieden werden kann. Die Rahmenteile werden möglichst ebenfalls vergossen oder mit einander verklebt, wobei als Vergussmasse oder Klebestoff vorzugsweise ein mit dem SMC chemisch verträgliches, gut haftendes festes Elastomer mit hoher Streckgrenze auszuwählen ist.

Die schematisch in Fig. 1 dargestellten elektrischen Zuleitungen (52) zur ersten Erregerspule (30)sollten so umgesetzt werden, dass durch diese unvermeidlichen Zuleitungen der nutzbare magnetische Querschnitt des Rahmens möglichst wenig beeinträchtigt wird. Zum Betrieb des Antriebs kann ein Kondensator bzw. eine Kondensatorbank (58) mit Hilfe eines Schalters (56), insbesondere eines Thyristors über die Erregerspule (30) entladen werden. Weiterhin ist eine Freilaufdiode zwischen den Anschlüssen 59 des Kondensators bzw. der Kondensatorbank vorgesehen. Auf diese kann, insbesondere wenn Folien- und/oder Filmkondensatoren eingesetzt werden, gegebenenfalls auch verzichtet werden.

Eine Steuerung (55) steuert den Schalter (56) an und übernimmt weiterhin über einen Schaltwandler (54) die Aufladung des Kondensators bzw. der Kondensatorbank.

Bei dem Schalter (56) handelt es sich bevorzugt um einen Halbleiterschalter, insbesondere einen Thyristor.

Um den Gewichtsanforderungen zu genügen, werden auch an den Schaltwandler höchste Ansprüche gestellt. Bevorzugt weist dieser Halbleiterschalter auf, insbesondere Halbleiterschalter mit großer Bandlücke (z.B. SiC-MOSFETs) und hochwertigem Kernmaterial (v.a. Kerne aus weichmagnetischen metallischen Gläsern und/oder nanokristallinen Legierungen mit diskretem Luftspalt).

Da die angesichts der üblicherweise sehr geringen Windungszahl ohnehin geringe Selbstinduktion der Spule durch den Kurzschlussläufer zusätzlich kurzgeschlossen wird, ist die initiale Induktivität der Anordnung äußerst gering, was die enorme Dynamik erst mit ermöglicht. Um den Thyristor vor einer zu hohen Stromanstiegsrate dl/dt zu schützen, kann es empfehlenswert sein, eine sättigende Induktivität (sog. "saturable reactor") einzuführen, beispielsweise indem eine Zuleitung zum Antrieb durch einen sättigenden hochpermeablen Ring(band-)kern geführt wird ("magnetic switch protection"). Ansonsten sind bei der erfindungsgemäßen Auslegung der äußeren Beschaltung des Antriebs die Impedanzen aller Komponenten zu berücksichtigen. Die Windungszahl der Erregerspule ist sowohl auf die Impedanz der Spannungsquelle als auch auf die mechanische Last abzustimmen, wobei die mechanische Last beispielsweise von der Masse des Kurzschlussläufers sowie gegebenenfalls damit verbundener weiterer Teile wie dem Kolben gebildet wird. Der elektrische Wirkungsgrad eines erfindungsgemäßen Antriebs weist bei gegebener konstanter Kapazität und Windungszahl ein Maximum bei einer bestimmten zu beschleunigenden Masse und einer damit verbundenen mechanischen Last auf. Die in den Figuren offenbarte Antriebsgeometrie eignet sich in vielen Fällen, ohne eine Optimierung derselben vornehmen zu müssen, unmittelbar einen hochdynamischen Antrieb für eine Anwendung danach zu entwerfen. Insgesamt arbeitet der Antrieb, indem zuerst die Erregerspule (30) den Kurzschlussläufer (40) abstößt, wobei die zugehörigen "Kraftkonstanten" mit zunehmender Entfernung rapide abnehmen, d.h. die abstossend wirkende Lorentzkraft ist bei gegebenen Signalen umso grösser, je kleiner die Entfernung zwische Erregerspule (30) und Kurzschlussläufer (40) ist. Demgemäß sind in der Hubanfangslage Erregerspule (30) und Kurzschlussläufer (40) möglichst nah an einander anzuordnen.

Werden als Kondensatoren Elektrolytkondensatoren (ELKOS) eingesetzt, kann es aufgrund des relativ hohen Innenwiderstands zu einer starken Erwärmung des Kondensators während des Stellvorgangs kommen. Zur Abhilfe kann vorgesehen sein, die ELKOS noch während des Stellvorgangs abzuschalten. Dies wird bevorzugt durch eine Sperrung des Halbleiterschalters oder eine Freilaufmöglichkeit, insbesondere in Form einer Freilaufdiode, bewerkstelligt.

Der ohmsche/reelle Innenwiderstand des ELKOS entspricht etwa dem der Spule. Bevorzugt ist vorgesehen, die Entladung des ELKOs nach Erreichen des Strommaximums zu unterbrechen, während der ELKO noch teilgeladen und ein großer Teil der elektrostatischen Energie aus dem ELKO in magnetische Feldenergie im Antriebsteil umgewandelt worden ist.

Der mit dem Magnetfeld verkettete Strom kann im weiteren über eine möglichst niederimpedante Freilaufdiode oder eine andere niederohmige Freilaufeinrichtung fließen, die vorzugsweise einen geringeren effektiven Verlustwiderstand aufweist als der ELKO selbst. Auf diese Weise wird nicht unnötig magnetische Feldenergie im ELKO, beispielsweise in dessen Elektrolyten, in Wärme umgewandelt.

Herkömmliche Thyristoren lassen sich nicht direkt abschalten. Alternativ sind GTOs, IGBTs, IGCTs, MCTs verwendbar, welche abschaltbar sind, jedoch auch mit vergleichsweise hohen Kosten verbunden sind. Möglich ist aber ein kurzzeitiges Umkehren der Stromrichtung im Thyristor (SCR1) mit Hilfe eines insbesondere vergleichsweise kleinen zweiten Thyristors ("Hilfsventil") und einer (kleinen) Drossel, bei gleichzeitigem Abschalten oder Umpolen des Stroms in das Gate von SCR1.

Bevorzugt werden jedoch Folienkondensatoren und/oder Filmkondensatoren eingesetzt, welche aufgrund des niedrigen Innenwiderstands keine solche Abschaltung benötigen.

Folien- und/oder Filmkondensatoren haben zwar immer noch eine geringere Energiedichte, als sie mit Elkos erreicht werden kann - Folien- und/oder Filmkondensatoren können jedoch einen ausserordentlich niedrigen Reihenwiderstand (ESR) aufweisen. Dieser niedrige Reihenwiderstand kann den Wirkungsgrad erheblich erhöhen.

Ein weiterer Vorteil von Folien- und Filmkondensatoren ist darin zu sehen, dass sie bipolar sind. Sie verkraften, umgepolt zu werden, sodass auf eine Freilaufdiode gegebenenfalls verzichtet werden kann, was aufgrund der damit verbundenen Gewichtsersparnis insbesondere bei einem handgeführten Gerät hilfreich ist.

Eine Kombination aus parallel geschalteten Elkos und Folien/Filmkondensatoren ist ebenfalls möglich.

Bei den Folien/Filmkondensatoren ist eine Abwägung zu treffen: Energiedichte versus ESR. Hier ist das Optimum (Gewicht/Wirkungsgrad - abhängig vom Anwendungsfall) numerisch zu ermitteln.

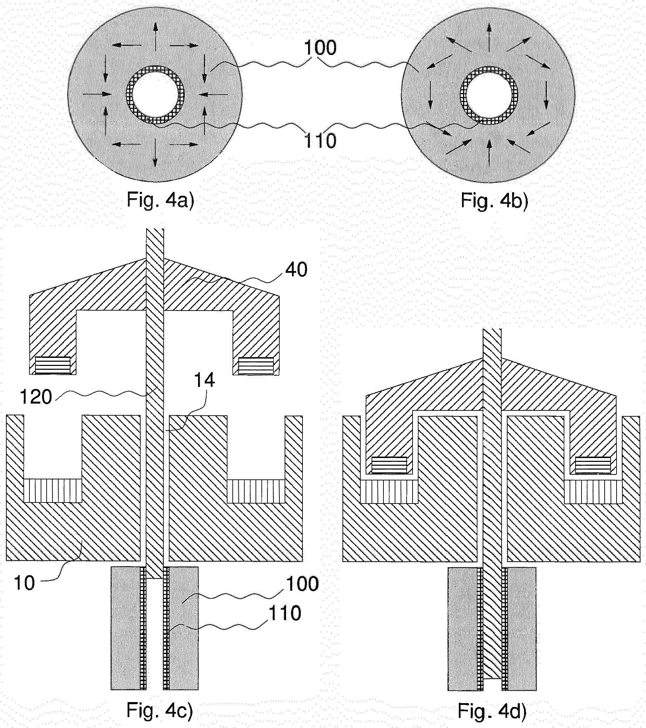

Der Antrieb weist weiterhin eine Vorrichtung (80) zum Zurückstellen des Kolbens (45) und/oder des Kurzschlussläufers (40) auf, welche in Fig. 1 lediglich abstrakt als Kästchen dargestellt ist, und nun anhand von Fig. 4a bis 4d noch einmal anhand eines Ausführungsbeispiels erläutert werden soll. Fig. 4c) und 4d) zeigen die Rückstellvorrichtung in einer Schnittansicht entlang der Bewegungsachse des Antriebs in den zwei Endstellungen.

Die Kolbenrückstellung kann beispielsweise mit Hilfe eines beispielsweise entlang der Bewegungsrichtung des Kolbens um mindestens eine Hublänge räumlich ausgedehnten weichmagnetischen Elements (120) geschehen, welches bevorzugt stabförmig ausgestaltet ist, beispielsweise einem stabförmigen Blechpaket oder einem weichmagnetischen Stab mit Schlitzen. Das weichmagnetische Element (120) ist mit dem Kolben verbunden, vorzugsweise starr verbunden, und/oder bildet das hintere Ende des Kolbens. Das weichmagnetische Element erstreckt sich bevorzugt durch eine axiale Öffnung (14) durch den Rahmen hindurch und ist beispielsweise hinter der Bodenfläche des Antriebs angeordnet.

Passend zum weichmagnetischen Element existiert eine Anordnung (100) von Permanentmagneten (PM), die einen Magnetkreis bilden, der beim Rückstellen des Kolbens zunehmend geschlossen wird, indem das weichmagnetische Element (120) in die Anordung zunehmend einfährt.

Der Fluss der Permanentmagnete wird dabei ganz oder überwiegend senkrecht zur Bewegungsrichtung in das weichmagnetische Teil geführt. Dabei können die PM nach Art eines sog. Halbach-Arrays ausgeführt sein, um den ansonsten notwendigen "Eisen-Rückschluss" und damit Gewicht einzusparen, und dennoch ein minimales Streufeld zu ermöglichen.

In Fig. 4a) und 4b) sind zwei unterschiedliche Ausgestaltungen solcher Anordnungen gezeigt, wobei die Pfeile die Richtung der Polarisation der permanentmagnetischen Elemente und/oder Bereiche angeben. Es handelt sich jeweils um Anordnungen in Form eines Halbach-Arrays.

Beispielsweise mit einem Halbach-Array, insbesondere gemäss Fig. 4b) ist es möglich, den von den PM erzeugten Fluss weitgehend transversal durch das bewegliche weichmagnetische Element (120) hindurch zu leiten: Entlang der Bewegungsrichtung bei horizontal betriebenem Antrieb treten die "Feldlinien" somit bspw. von unten ins "Eisen" ein-, und oben aus dem "Eisen" aus. Laterale Bewegungen des Eisens (entlang der Feldlinien, d.h. orthogonal zur Bewegungsrichtung) führen dann nur zu einer verschwindenden Änderung der magnetischen Feldenergie, weshalb eine solche Anordnung nahezu vollkommen frei ist von magnetischen Querkräften, die ansonsten z.B. Lager belasten könnten, beispielsweise ein das weichmagnetische Element führendes Gleitlager.

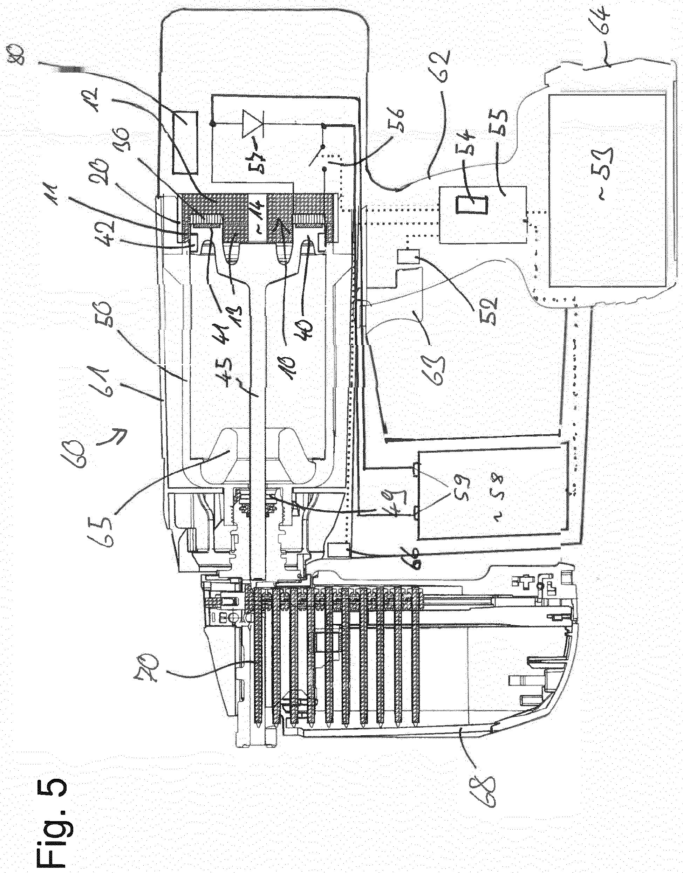

Innerhalb der Anordnung von Permanentmagneten ist ein Gleitlager (110) für das weichmagnetische Element vorgesehen. Die Anordnung von Permanentmagneten umgibt das weichmagnetische Element und/oder das Gleitlager bevorzugt ringförmig und/oder weist die Form eines Hohlzylinders auf.Fig. 5 zeigt nun ein Ausführungsbeispiel eines erfindungsgemäßen Nagelsetzgerätes mit einem erfindungsgemäßen Antrieb, wie er in Fig. 1 und/oder 4 näher dargestellt ist. Im Hinblick auf den elektrondynamischen Antrieb verweisen wir daher auf die obige Darstellung.

Das handgeführtes Nagelsetzgerät umfasst dabei neben den Komponenten des Antriebs, d.h. der ersten Erregerspule (30), dem weichmagnetischen Rahmen (10), dem entlang der Achse (1) beweglich gelagerten Kurzschlussläufer (40) und der Zugentlastung (20) weiterhin mindestens einen Kondensator (58), mindestens einen elektrochemischen Energiespeicher (53), insbesondere in Form eines Akkumulators, einen Schaltwandler (54), einen Schalter (56), einen Kolben (45), und eine hier ebenfalls nur schematisch dargestellte Rückstellvorrichtung (80) für den Kurzschlussläufer (40) und den Kolben (45). Zum Setzen eines Nagels (70) wird zuerst der Kondensator (58) mit Hilfe des Schaltwandlers (54) mit elektrischer Energie aus dem elektrochemischen Energiespeicher (53) aufgeladen, woraufhin der Schalter (56) geschlossen wird, um eine Entladung des Kondensators (58) über die Erregerspule (30) herbeizuführen, woraufhin der Kurzschlussläufer (40) und der Kolben (45) aus ihren Hubanfangslagen heraus beschleunigt werden, und der Kolben (45) genutzt wird, den Nagel (70) einzutreiben, und wonach die Rückstellvorrichtung (80) benutzt wird, den Kolben (45) und den Kurzschlussläufer (40) in die Hubanfangslagen zurückzustellen.

Das Eintreiben des Nagels erfolgt, indem die Spitze des Kolbens (45) auf einen Nagel 70 schlägt, welcher beispielsweis in einem an der Vorderseite des Nagelsetzgerätes angeordnetem Magazin (68) bereitgestellt wird.

Der Nagelsetzvorgang wird durch Betätigen des Triggerschalters (52) ausgelöst, z.B. durch Drücken einer Taste (63). Die Steuerung (55) erlaubt jedoch nur dann das Auslösen eines Nagelsetzvorgangs, wenn die Spitze des Nagelsetzgerätes aufgesetzt ist, was über den Anpressschalter (66) erfasst wird. Die Steuerung (55) fragt den Anpressschalter (66) sowie den Triggerschalter (52) ab und steuert den Schaltwandler (54) und den Schaltwandler (56) an.

Das Nagelsetzgerät (60) weist weiterhin einen Dämpfer (65) auf, welcher geeignet ist, die Bewegungsenergie des Kolbens aufzunehmen und unter Umständen eine Zerstörung des Gerätes auch für den Fall zu verhindern, dass der Nagel ohne nennenswerten Arbeitsaufwand gesetzt werden kann. Der Dämpfer ist vorliegend am Ausgang des Gehäuses (50) des Antriebs vorgesehen.

Das Gehäuse (61) des Nagelsetzgerätes umgibt neben dem Antrieb weiterhin auch die Kondensatoren (58), welche vorliegend in axialer Richtung hinter dem Antrieb im Gehäuse angeordnet sind.

Das Gehäuse kann dabei als Außengehäuse der Kondensatoren dienen, welche hierdurch keine eigene Einhausung benötigen. Im Bereich der Kondensatoren (58) ist das Gehäuse bevorzugt aus Metall gefertigt, um eine hohe Wärmeleitfähigkeit und damit gute Kühlung der Kondensatoren zu gewährleisten.

Das Gehäuse des Nagelsetzgerätes umfasst einen Griffbereich (62), an welchem die Taste (63) angeordnet ist. Der elektrochemische Energiespeicher (53), insbesondere in Form eines Akkumulators, ist bevorzugt in einem separaten Gehäuseteil 64 angeordnet, welches lösbar mit dem übrigen Gehäuse verbindbar ist, um den elektrochemischen Energiespeicher wechseln zu können.

## Patentansprüche

1. Handgeführtes Nagelsetzgerät, umfassend
- einen vermittels einer Kondensatorentladung betriebenen, elektrodynamischen Antrieb mit einer Erregerspule (30), einem Rahmen (10) und einem entlang einer Achse beweglich gelagerten Kurzschlussläufer (40),
- mindestens einen Kondensator (58),
- mindestens einen elektrochemischen Energiespeicher (53),
- mindestens einen Schaltwandler (54),
- mindestens einen Schalter (56),
- einen Kolben (45),
- eine Rückstellvorrichtung (80) für den Kurzschlussläufer (40) und den Kolben (45),
wobei zum Setzen eines Nagels zuerst der Kondensator (58) mit Hilfe des Schaltwandlers (54) mit elektrischer Energie aus dem elektrochemischen Energiespeicher (53) aufgeladen wird, woraufhin der mindestens eine Schalter (56) geschlossen wird, um eine Entladung des Kondensators (58) über die Erregerspule (30) herbeizuführen, woraufhin der Kurzschlussläufer (40) und der Kolben (45) aus ihren Hubanfangslagen heraus beschleunigt werden, und der Kolben (45) genutzt wird, den Nagel einzutreiben, und wonach die Rückstellvorrichtung (80) benutzt wird, den Kolben (45) und den Kurzschlussläufer (45) in die Hubanfangslagen zurückzustellen,
**dadurch gekennzeichnet,**
**dass** die Erregerspule (30) einen Kupferfüllgrad von wenigstens 30% aufweist,
**dass** es sich bei dem Rahmen (10) um einen weichmagnetischen Rahmen (10) handelt, wobei der Rahmen (10) eine Sättigungsflussdichte von mindestens 1,5 T und/oder eine effektive spezifische elektrische Leitfähigkeit von höchstens 10⁵ S/m aufweist,
**dass** die Erregerspule (30) und/oder der Rahmen (10) mindestens ein Mittel (20) zur Zugentlastung aufweisen,
**dass** der Schalter (56) ein Halbleiterschalter ist und
**dass** eine Setzenergie des Nagelsetzgeräts ≥ 10 J beträgt.

2. Handgeführtes Nagelsetzgerät nach Anspruch 1, wobei der Rahmen (10) aus einem oder mehreren weichmagnetischen Blechpaketen gebildet ist.

## Claims

1. Handheld nail setting tool, comprising
- an electrodynamic drive which is operated by means of capacitor discharge and has an excitation coil (30), a frame (10) and a squirrel-cage rotor (40) mounted movably along an axis,
- at least one capacitor (58),
- at least one electrochemical energy storage unit (53),
- at least one switching converter (54),
- at least one switch (56),
- a piston (45),
- a resetting device (80) for the squirrel-cage rotor (40) and the piston (45),
wherein, in order to set a nail, the capacitor (58) is first charged with electrical energy from the electrochemical energy storage unit (53) with the aid of the switching converter (54), after which the at least one switch (56) is closed in order to cause discharge of the capacitor (58) via the excitation coil (30), after which the squirrel-cage rotor (40) and the piston (45) are accelerated out of their stroke start positions, and the piston (45) is used to drive in the nail, and after which the resetting device (80) is used to return the piston (45) and the squirrel-cage rotor (45) to the stroke start positions,
**characterized**
**in that** the excitation coil (30) has a copper fill level of at least 30%,
**in that** the frame (10) is a soft-magnetic frame (10), wherein the frame (10) has a saturation flux density of at least 1.5 T and/or an effective specific electrical conductivity of at most 10⁵ S/m,
**in that** the excitation coil (30) and/or the frame (10) have at least one means (20) for strain relief,
**in that** the switch (56) is a semiconductor switch, and
**in that** a setting energy of the nail setting tool is ≥ 10 J.

2. Handheld nail setting tool according to Claim 1, wherein the frame (10) is formed from one or more soft-magnetic laminated cores.

## Revendications

1. Appareil de pose de clous portatif, comprenant
- un entrainement électrodynamique actionné au moyen d'une décharge de condensateur, comportant une bobine d'excitation (30), un bâti (10) et un rotor en court-circuit (40) monté mobile le long d'un axe,
- au moins un condensateur (58),
- au moins un dispositif de stockage d'énergie électrochimique (53),
- au moins un convertisseur à commutation (54),
- au moins un commutateur (56),
- un piston (45),
- un dispositif de rappel (80) pour le rotor en court-circuit (40) et le piston (45),
dans lequel, pour la pose d'un clou, le condensateur (58) est d'abord chargé avec de l'énergie électrique provenant du dispositif de stockage d'énergie électrochimique (53) à l'aide du convertisseur à commutation (54), après quoi l'au moins un commutateur (56) est fermé pour provoquer une décharge du condensateur (58) via la bobine d'excitation (30), à la suite de quoi le rotor en court-circuit (40) et le piston (45) sont accélérés à partir de leurs positions de début de course, et le piston (45) est utilisé pour enfoncer le clou, et après quoi le dispositif de rappel (80) est utilisé pour ramener le piston (45) et le rotor en court-circuit (45) dans les positions de début de course,
**caractérisé en ce que**
la bobine d'excitation (30) présente un degré de remplissage en cuivre d'au moins 30%, le bâti (10) est un bâti (10) magnétique doux, le bâti (10) présentant une densité de flux de saturation d'au moins 1,5 T et/ou une conductivité électrique spécifique effective d'au plus 10⁵ S/m,
la bobine d'excitation (30) et/ou le bâti (10) comportent au moins un moyen de décharge (20) de traction,
le commutateur (56) est un commutateur à semi-conducteur, et
une énergie de pose de l'appareil de pose de clous est ≥ 10 J.

2. Appareil de pose de clous portatif selon la revendication 1, dans lequel le bâti (10) est formé d'un ou de plusieurs paquets de tôles magnétiques douces.
